Europäisches Patentamt

European Patent Office

Office européen des brevets

(11) Veröffentlichungsnummer: **0 355 761**
**A2**

## (12) EUROPÄISCHE PATENTANMELDUNG

(21) Anmeldenummer: 89115343.9

(22) Anmeldetag: 19.08.89

(51) Int. Cl.⁴ **C08L 63/00 , C08G 59/50 ,
C08G 59/17 , C09D 163/00 ,
//(C08L63/00,33:00)**

(30) Priorität: 24.08.88 AT 2084/88

(43) Veröffentlichungstag der Anmeldung:
28.02.90 Patentblatt 90/09

(84) Benannte Vertragsstaaten:
BE CH DE ES FR GB GR IT LI NL SE

(71) Anmelder: Vianova Kunstharz
Aktiengesellschaft

A-8402 Werndorf(AT)

(72) Erfinder: Zückert, Bertram Dr.-Chem.
Krottendorferstrasse 90
A-8052 Graz(AT)

(54) Verfahren zur Herstellung von wässrigen, oxidativ trocknenden Epoxidharzester-Emulsionen und deren Verwendung als Bindemittel für lufttrocknende Lacke.

(57) Die Erfindung betrifft ein Verfahren zur Herstellung von wäßrigen, oxidativ trocknende Fettsäurereste aufweisenden Epoxidharzesteremulsionen, die als Bindemittel für lufttrocknende bzw. forciert trocknende Lacke eingesetzt werden.

Die Herstellung der Epoxidharzester erfolgt durch Umsetzung eines Epoxidharz-Fettsäure-Partialesters mit einem Fettsäure-Methacrylsäure-Copolymerisat. Gegebenenfalls enthält das Bindemittel in Mischung oder partiell reagierter Form ein basisches Zusatzharz. Durch den Zusatz können die rheologischen Eigenschaften sowie die Lagerstabilität verbessert werden.

EP 0 355 761 A2

EP 0 355 761 A2

## Verfahren zur Herstellung von wäßrigen, oxidativ trocknenden Epoxidharzester-Emulsionen und deren Verwendung als Bindemittel für lufttrocknende Lacke.

Die Erfindung betrifft ein Verfahren zur Herstellung von wäßrige, oxidativ trocknende Fettsäurereste aufweisenden Epoxidharzesteremulsionen, die als Bindemittel für lufttrocknende bzw. forciert trocknende Lacke eingesetzt werden.

Wasserverdünnbare Epoxidharzester, die als Lackbindemittel Verwendung finden, sind aus der Literatur seit langem bekannt. Im wesentlichen handelt es sich dabei um Additionsprodukte von alpha, beta-ethylenisch ungesättigten Mono- oder Dicarbonsäuren an Ester von Epoxidharzen vom Bisphenol A-Typ mit ungesättigten Ölfettsäuren oder um Pfropfpolymerisationsprodukte dieser Säuren zusammen mit anderen Monomeren an die genannten Ester (siehe z. B. KITTEL, Bd I/3, S 904; Verlag W.A. Colomb in der H. Heenemann GmbH Berlin - Oberschwandorf, 1974).

In der DE-AS 22 58 406 wird ein modifiziertes Verfahren vorgeschlagen, gemäß welchem die Epoxidharze mit Addukten aus ungesättigten Ölfettsäuren und Acrylsäure verestert werden. Bei diesem Verfahren wird jeweils ein Mol Acrylsäure an ein Mol Fettsäure gebunden. Wegen der relativ großen Menge an Acrylsäure, welche für die Wasserlöslichkeit erforderlich ist, muß der größte Teil der eingesetzten Fettsäure zur Adduktbildung herangezogen werden und verliert dadurch weitgehend die Fähigkeit zur oxidativen Trocknung. Diese Produkte sind daher im allgemeinen nur zur Formulierung von Einbrennlacken geeignet. Außerdem benötigen Bindemittel dieser Art bei der weiteren Verarbeitung relativ große Mengen von Hilfslösemitteln, damit eine brauchbare Viskosität der nach Neutralisation der Carboxylgruppen wasserlöslichen Harze erreicht wird.

Gemäß der US-PS 4,166,054 werden Ester von Epoxidharzen mit ungesättigten Fettsäuren mit Mischungen aus (Meth)acrylsäure und anderen Vinyl- oder Acrylmonomeren gepfropft. Diese Produkte enthalten aus verfahrenstechnischen Gründen große Mengen organischer Hilfslösemittel. Durch den Einsatz "harter" Monomerer, wie Styrol oder Methylmethacrylat, kann zwar eine rasche Trocknung erreicht werden, doch werden nur trübe, schlecht glänzende Filme erhalten. Beim Einsatz der mit dem Esterskelett besser verträglichen weichen Monomeren ergibt sich jedoch eine verzögerte Trocknung. Überdies wird bei diesen Produkten trotz der Anwesenheit der großen Mengen an Hilfslösemitteln eine für die Praxis ungenügende Stabilität der wäßrigen Lösungen beobachtet.

Durch Einbau von Aminogruppen erhaltene kationisch stabilisierte Epoxidharzesterbindemittel, wie sie beispielsweise in der EP-B-70704 beschrieben werden, zeigen im wesentlichen die oben beschriebenen Nachteile, wie hohen Lösemittelgehalt und verzögerte Trocknung. Zusätzlich bewirkt die als Neutralisationsmittel eingesetzte Säure eine Korrosion an den damit in Berührung kommenden Metalloberflächen, wie an den Lackdosen oder an den Produktionsaggregaten. Zur Verbesserung der Trocknung wird in der oben genannten Patentschrift der Zusatz von 1, 10-Phenanthrolin vorgeschlagen, was jedoch zu einer starken Verfärbung der Lacke führt.

Gemäß EP-A-267 562 werden lufttrocknende Lackbindemittel durch Polymerisation von Styrol und (Meth)acrylestermonomeren in Gegenwart wasserlöslicher Alkydharze, Urethanalkydharze oder Epoxidharzester hergestellt. Dabei werden stabile, rasch trocknende Copolymeremulsio nen erhalten, die nur geringe Mengen an Hilfslösemitteln benötigen. Durch diese Modifikation treten jedoch Mängel in der Haftung sowie in der chemischen und mechanischen Beständigkeit, wie sie bei Copolymerdispersionen beobachtet werden, in verstärktem Maße auf.

Es wurde nun gefunden, daß man Bindemittel für lufttrocknende Lacke auf der Basis von Epoxidharzesteremulsionen erhält, die die Nachteile der Produkte des Standes der Technik in wesentlich verringertem Außmaß zeigen, wenn die den Emulsionen zugrundeliegenden Epoxidharzester durch eine spezifische Verfahrensführung hergestellt werden, eine entsprechend große mittlere Molmasse aufweisen und gegebenenfalls zusätzlich Anteile einer aminofunktionellen Polymerkomponente enthalten.

Die Erfindung betrifft dementsprechend ein Verfahren zur Herstellung von wäßrigen, oxidativ trocknenden Epoxidharzesteremulsionen, welches dadurch gekennzeichnet ist, daß man

(A) 25 bis 45 Gew.-% eines oder mehrerer Epoxidharze mit einem mittleren Epoxidäquivalentgewicht zwischen 200 und 1000, vorzugsweise solchen auf Basis des Bisphenol A, mit

(B) 20 bis 40 Gew.-% von ungesättigten Fettsäuren, vorzugsweise von Gemischen isoliert ungesättigter Fettsäuren mit konjugiert ungesättigten Fettsäuren, bis zu einer Säurezahl von 5 bis 15 mg KOH/g verestert, anschließend den Partialester mit

(C) 20 bis 50 Gew.-% eines Fettsäurecopolymerisates aus 30 bis 50 Gew.-% von ungesättigten Fettsäuren mit einer Jodzahl von über 135, vorzugsweise von 160 -200, und überwiegend isolierten Doppelbindungen, 10 bis 25 Gew.-% Methacrylsäure und 30 bis 55 Gew.-% anderen copolymerisierbaren

2

Monomeren, welche neben der C-C-Doppelbindung keine weiteren funktionellen Gruppen tragen, bis zu einer Säurezahl, welche etwa 90 % der von der Methylacrylsäure stammenden Carboxylgruppen entspricht, und einer Grenzviskositätszahl, gemessen in Chloroform bei 20°C, zwischen 14 und 24 ml/g, reagiert, mit der Maßgabe, daß die Menge der Komponenten so gewählt wird, daß die Säurezahl des Reaktionsproduktes zwischen 30 und 60, vorzugsweise zwischen 35 und 55 mg KOH/g liegt, und gegebenenfalls nach Zumischung von oder partieller Reaktion mit bis zu 45 Gew-%, bezogen auf die Menge des sauren Epoxidharzesters, eines Aminogruppen entsprechend einer Aminzahl von 5 bis 40 mg KOH/g aufweisenden Polykondensations-, Polyadditions- und/oder Polymerisationsprodukts, wobei die Aminzahl des Endproduktes maximal 5 mg KOH/g betragen soll, und nach Zugabe von maximal 20 Gew.-% eines organischen, wasserverträglichen Lösemittels und, nach teilweiser oder vollständiger Neutralisation der freien Carboxylgruppen, das Endprodukt in Wasser emulgiert.

Die Erfindung betrifft weiters die Verwendung der nach diesem Verfahren hergestellten Epoxidharzesteremulsionen als Bindemittel für lufttrocknende und forciert trocknende Lacke.

Die erfindungsgemäß hergestellten Emulsionen zeigen ausgezeichnete Stabilität und Pigmentbenetzung, ein gutes Applikationsverhalten und ergeben Filme mit Eigenschaften, die denen von "konventionellen", d.h. in organischen Lösemitteln vorliegenden Epoxidharzestern weitgehend entsprechen.

Für die Herstellung der erfindungsgemäß eingesetzten Epoxidharzester werden 25 bis 45 Gew.-% eines Epoxidharzes oder Mischungen verschiedener Epoxidharze mit einem mittleren Epoxidäquivalentgewicht zwischen 200 und 1000 eingesetzt. Vorzugsweise werden Epoxidharze des Bisphenol-A-Typs verwendet, doch können auch untergeordnete Mengen anderer Epoxidharze mitverwendet werden.

In der ersten Verfahrensstufe werden die Epoxidharze mit 20 bis 40 Gew.-% von ungesättigten Fettsäuren, vorzugsweise von Gemischen isoliert ungesättigter Fettsäuren mit konjugiert ungesättigten Fettsäuren, bis zu einer Säurezahl von 5 bis 15 mg KOH/g verestert.

Als Fettsäuren werden die in den natürlichen Ölen und Fetten vorkommenden Säuren oder deren chemische Modifikationsprodukte oder ähnliche aus Naturprodukten gewonnene oder synthetisch hergestellte Verbindungen eingesetzt. Die Säuren weisen eine Jodzahl von über 120 auf. Beispiele für solche Fettsäuren sind die Fettsäuregemische, wie sie im Sojaöl, Saffloröl oder Leinöl vorkommen oder als Tallölfettsäuren im Handel sind. Konjugierte Doppelbindungen weisen die Fettsäuren des Holzöles oder des dehydratisierten Rizinusöles oder die durch Isomerisierung aus isoliert ungesättigten Fettsäuren hergestellten Konjuenfettsäuren auf.

Anschließend wird der Fettsäure-Epoxidharz-Partialester mit einem Fettsäure-Methacrylsäure-Copolymer (Komponente C) solange verestert, bis die Säurezahl des Reaktionsproduktes etwa 90 % der Carboxylgruppen der eingesetzten Methacrylsäure entspricht.

Um eine ausreichende Trocknung und eine gute Filmvernetzung zu gewährleisten, muß die mittlere Molmasse der Harze ausreichend groß sein. Als indirektes Maß für die Molmasse dient die Grenzviskositätszahl, gemessen in Chloroform bei 20°C, die einen Wert von 14 bis 24 ml/g erreichen muß. Die Mengen der einzelnen Komponenten werden so gewählt, daß im Endprodukt Carboxylgruppen entsprechend einer Säurezahl zwischen 30 und 60 mg KOH/g vorliegen. Der bevorzugte Säurezahlbereich liegt zwischen 35 und 55 mg KOH/g.

Vorzugsweise bestehen ca. zwei Drittel des Gesamtfettsäuregehaltes des Epoxidharzesters aus den Fettsäuren der Komponente B, während der Rest der Fettsäuren in Form des Fettsäurecopolymerisates vorliegt (Komponente C), welches zur Einführung der für die Wasserverdünnbarkeit des Epoxidharzesters erforderlichen Carboxylgruppen dient. Da diese, von der Methacrylsäure stammenden, Säuregruppen in den Copolymerketten tertiäre Stellung aufweisen und somit sterisch behindert sind, kann angenommen werden, daß sie wesentlich langsamer als die primären Carboxylgruppen der Fettsäuren verestern und nach Beendigung der Reaktion den Hauptanteil der freien Säuregruppen liefern, welche die Wasserlöslichkeit des Harzes bewirken.

Für die Herstellung der Fettsäure-Copolymeren werden ungesättigte Fettsäuren mit einer Jodzahl über 135 (bevorzugt 160 - 200) und mit überwiegend isolierter Stellung der Doppelbindungen eingesetzt. Geeignet sind u.a. Leinölfettsäure, Safflorölfettsäure sowie die Fettsäuren des Hanf-, Lallemantia-, Perilla- und Stillingiaöles, gegebenenfalls in Abmischung mit bis zu 25 Gew.-% an dehydratisierter Rizinusölfettsäure oder einer vergleichbaren, durch Isomerisierung hergestellten Conjuen-Fettsäure.

Die Fettsäure-Copolymerisate sind aus 30 bis 50 Gew.-% der obengenannten Fettsäuren, 10 bis 25 Gew.-% Methacrylsäure und 30 bis 55 Gew.-% anderen Monomeren, welche neben der C-C-Doppelbindung keine weiteren funktionellen Gruppen tragen, zusammengesetzt, wobei die Summe der Prozentanteile 100 ergeben muß. Als Monomere, welche neben der Methacrylsäure eingesetzt werden, dienen vorzugsweise (Meth)acrylverbindungen und/oder aliphatische und/oder aromatische Vinylverbindungen, insbesonders solche, die benzinlösliche Homopolymere bilden.

3

Geeignet sind u. a. Ester der Methacrylsäure und Acrylsäure mit n-Butanol, Isobutanol, tert.-Butanol oder 2-Ethylhexanol. Zum Einstellen der optimalen Tg-Bereiches des Copolymeren bzw. der daraus resultierenden Filmhärte wird Vinyltoluol verwendet. In kleineren Anteilen (bis zu 20 Gew.-%) können auch Monomere, welche benzinunlösliche Polymere bilden, wie Methylmethacrylat oder Styrol, mitverwendet werden.

Die Pfropfcopolymerisation wird so durchgeführt, daß die Hauptmenge der Fettsäure, gegebenenfalls in Gegenwart geringer Anteile inerter Lösemittel, auf 110 -150°C erhitzt wird und die Mischung der Monomeren mit einem geeigneten Initiator und der restlichen Fettsäure im Verlauf von einigen Stunden zudosiert wird. Die Reaktionsmischung wird anschließend so lange weiter auf Reaktionstemperatur gehalten, bis eine Rückstandsbestimmung einen Polymerisationsumsatz über 95 % ergibt. Als Initiatoren kommen u.a. Di-tert.-Butylperoxid, tert.-Butylperbenzoat und Cumolhydroperoxid in Betracht.

In einer besonderen Ausführungsform werden die erfindungsgemäß hergestellten Epoxidharzester vor der Emulgierung in Wasser mit bis zu 45 Gew. %, bezogen auf die Menge des Epoxidharzesters, eines mit diesem zumindest weitgehend verträglichen, Aminogruppen entsprechend einer Aminzahl von 5 bis 40 mg KOH/g aufweisenden Polykondensations-, Polyadditions- und/oder Polymerisationsproduktes gemischt. Die Menge des basischen Zusatzharzes wird so bemessen, daß das Endprodukt eine berechnete Aminzahl von maximal 5 mg KOH/g aufweist.

Für die Auswahl des basischen Zusatzharzes sind als wesentliche Kriterien die zumindest weitgehende Verträglichkeit mit dem Epoxidharzester bzw. die Basizität des Zusatzes entsprechend einer Aminzahl zwischen 5 und 40 mg KOH/g zu betrachten. Die Verträglichkeit ist dann gegeben, wenn Mischungen aus gleichen Teilen der beiden Komponenten ohne Zusatz von Hilfslösemitteln keine Trübungen aufweisen oder eine mangelhafte Verträglichkeit durch eine partielle Reaktion der Komponenten überbrückt werden kann. Dies kann beispielsweise durch Co-Kondensation nach Zugabe der basischen Komponente in der letzten Phase der Epoxidharzesterbildung erfolgen. Die Verknüpfung kann aber auch durch Reaktion mit geringen Mengen von Diisocyanaten erreicht werden. Selbstverständlich ist dabei darauf zu achten, daß die partielle Verknüpfung der Komponenten nicht zur Gelierung oder einer mangelhaften Emulgierbarkeit führt. Gegebenenfalls kann eine partielle Verknüpfung der Komponenten auch bei an sich verträglichen Komponenten erfolgen.

Beispiele für basische Zusatzharze sind

. Aminofunktionelle Epoxidharzester, die in bekannter Weise durch Reaktion von Epoxidharzen mit primären und/oder sekundären Aminen und/oder Alkanolaminen und Fettsäuren erhalten werden. Die Einführung der basischen Gruppen kann auch durch Copolymerisation mit aminofunktionellen Vinyl-oder (Meth)-acrylverbindungen, wie Dimethylaminoethyl(meth)acrylat u.a. oder 1-Allyloxy-2-hydroxy-3-diethylamino-propan erfolgen.

. Aminofunktionelle Alkydharze, die durch Mitverwendung von tertiären Alkanolaminen (z.B. Triethanolamin) bei der Alkydharzbildung erhalten werden. Ebenso ist eine Copolymerisation mit basischen Monomeren (wie oben) möglich.

. Aminofunktionelle Urethan- oder Urethanalkyd- oder Polyamidharze können ebenfalls in dieser Weise bzw. durch den Einbau von tert. Alkyl-Alkanolaminen bei der Urethanbildung hergestellt werden oder stellen handelsübliche Produkte dar.

. Aminofunktionelle Copolymerisate werden in bekannter Weise durch Mitverwendung von basischen Monomeren oder durch Umsetzung von Glycidyl(meth)acrylat-copolymeren mit prim. oder sek. Aminen erhalten.

Durch den Zusatz dieser basischen Komponenten wird insbesonders das rheologische Verhalten der Emulsionen beeinflußt, was einerseits in einem höheren Festkörpergehalt bei gleicher Viskosität, andererseits in einer weiter verbesserten Stabilität bzw. in verbesserten Verarbeitungseigenschaften, wie Pigmentbenetzung oder Verlauf, seinen Ausdruck findet. Die basischen Gruppen des Zusatzharzes werden vom sauren Epoxidharzester neutralisiert; eine getrennte Neutralisation ist nicht erforderlich. Gegebenenfalls können auch Mischungen der obengenannten Harztypen eingesetzt werden.

Der erfindungsgemäß hergestellte Epoxidharzester bzw. die Kombination mit dem Zusatzharz wird zur Erleichterung der Emulgierung in Wasser in maximal 20 Gew.-% (bezogen auf Festharz) von organischen Hilfslösemitteln gelöst. Als wasserverträgliche Lösemittel sind vor allem die $C_1$-$C_4$-Alkylether des Monoethylenglykols, des Diethylenglykols sowie der Propylen- bzw. Dipropylenglykole geeignet. Ein bevorzugtes Lösemittel ist das n-Butoxyethanol.

Nach partieller oder vollständiger Neutralisation der Carboxylgruppen mit Ammoniak, organischen Aminen, wie Diethylamin, Triethylamin oder Dimethylethanolamin, oder Alkalihydroxyden, wie Lithium-, Natrium oder Kaliumhydroxid werden die Produkte mit Wasser verdünnt. Zur Erzielung der erwünschten Stabilität der Emulsion sollten mind. 60 % der vorhandenen Carboxylgruppen neutralisiert werden. Die

4

basischen Gruppen des gegebenenfalls eingesetzten Zusatzharzes tragen ebenfalls zur Neutralisation der Carboxylgruppen bei.

Die transparenten oder opaken Emulsionen sind bei Festkörpergehalten von ca. 35 bis 45 % gut fließfähig und verarbeitbar. Sie sind bei Normaltemperatur mindestens ein Jahr ohne Qualitätsverlust lagerfähig.

Die erfindungsgemäß hergestellten Bindemittel dienen zur Herstellung von pigmentierten oder nichtpigmentierten wasserverdünnbaren Lacken, welche, gegebenenfalls nach Zusatz üblicher Lackhilfsmittel, durch Streichen, Fluten, Spritzen oder Tauchen verarbeitet werden können. Die Trocknung der Anstriche erfolgt bei Raumtemperatur oder durch forcierte Lufttrocknung bei Temperaturen bis 100°C. Bei entsprechendem Aufbau der Bindemittel und Mitverwendung von Vernetzungsmitteln können die Bindemittel auch für Einbrennlacke herangezogen werden.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten. Die Grenzviskositätszahlen wurden in Chloroform (CHCl₃) oder Dimethylformamid (DMF) bei 20°C bestimmt und werden in ml/g angegeben. Bei Epoxidharzen wird das Epoxidäquivalentgewicht als EEW angegeben. Bei Mischungen von Epoxidharzen resultiert das mittlere EEW aus den Gewichtsanteilen der einzelnen Epoxidharze.

Herstellung der Fettsäure-Methacrylsäure-Copolymerisate

Copolymerisat C 1:

30 Tle Leinölfettsäure und 5 Tle Xylol werden auf 135 bis 140°C erwärmt. Bei dieser Temperatur wird innerhalb 6 bis 8 Stunden gleichzeitig eine Mischung aus 32 Tlen Isobutylmethacrylat, 6 Tlen Vinyltoluol und 21 Tlen Methacrylsäure sowie eine Mischung aus weiteren 11 Tlen der Leinölfettsäure, 3 Tlen tert.-Butylperbenzoat, 1 Tl Dibenzoylperoxid (50 %ig) und 5 Tlen Xylol gleichmäßig zugegeben. Nach Beendigung der Zugabe wird die Reaktionstemperatur beibehalten, bis eine Rückstandsbestimmung einen mindestens 95 %igen Polymerisationsumsatz ergibt. Bei zu langsamen Reaktionsfortgang wird der Ansatz mit 1 Tl tert.-Butylperbenzoat versetzt. Das Copolymerisat weist eine Säurezahl von 209 mg KOH/g und eine Grenzviskositätszahl (DMF/20°C) von 5,5 auf.

Copolymerisat C 2:

In gleicher Weise wird ein Copolymerisat aus 41 Tlen Leinölfettsäure, 22 Tlen Isobutylmethacrylat, 10 Tlen n-Butylmethacrylat, 10 Tlen Vinyltoluol und 17 Tlen Methacrylsäure in Gegenwart von 10 Tlen Xylol hergestellt. Das Copolymerisat weist eine Säurezahl von 185 mg KOH/g und eine Grenzviskositätszahl (DMF/20°C) von 5,1 auf.

**Beispiele 1 - 8**

(A) Herstellung der Epoxidharzester

Unter Verwendung der in der Tabelle 1 angegebenen Rohstoffe werden die Epoxidharzester wie folgt hergestellt:

In einem für die Herstellung von Kondensationsharzen üblichen Reaktionsgefäß wird Teil 1 auf 150°C erwärmt und Teil 2 in mehreren Portionen in der Weise zugegeben, daß die Temperatur bei 150°C gehalten werden kann. Anschließend wird bei 200°C, gegebenenfalls unter Verwendung von Xylol als azeotropem Schleppmittel, bis zu einer Säurezahl von ca. 10 mg KOH/g verestert. Nach Zugabe von Teil 3 wird die Reaktion bei 200°C und später bei 180°C bis zum Erreichen der gewünschten Kennwerte weitergeführt. Das Kreislaufmittel wird rechtzeitig vor Ende der Reaktion unter Vakuum abgezogen.

Hinweise zu den gemäß Tab. 1 eingesetzten Rohstoffen:

iso-Linolsäure: technische isomerisierte Linolsäure mit ca. 50 % 9,11-Linolsäure

Epoxidharz A: Bisphenol A-Epoxidharze, EEW ca. 475

5

Epoxidharz B: Mischung aus einem Bisphenol A-Epoxidharz mit einem EEW von ca. 475 mit einem Bisphenol A-Epoxidharz mit einem EEW von ca. 195 im Gewichtsverhältnis 2 : 0,9 (mittleres EEW 380). EEW bedeutet Epoxidäquivalentgewicht

Tabelle 1

|  | SE 1 | SE 2 | SE 3 | SE 4 | SE 5 |
|---|---|---|---|---|---|
| TEIL 1 |  |  |  |  |  |
| Safflorölfettsäure | 140 | -- | -- | 130 | -- |
| Sojaölfettsäure | -- | 220 | -- | -- | -- |
| Tallölfettsäure | -- | -- | 110 | -- | 120 |
| iso-Linolsäure | 140 | 120 | 110 | 90 | 160 |
| Triethylamin (als Katalysator) | 1 | 1 | 1 | 1 | 1 |
| TEIL 2 |  |  |  |  |  |
| Epoxidharz A | 290 | 290 | 290 | 290 | -- |
| Epoxidharz B | -- | -- | -- | -- | 290 |
| TEIL 3 |  |  |  |  |  |
| Copolymerisat C 1 | 340 | 370 | -- | 250 | 340 |
| Copolymerisat C 2 | -- | -- | 300 | -- | -- |
| Grenzviskositätszahl (CHCl$_3$/20° C) | 19 | 17 | 16 | 18 | 20 |
| Säurezahl (mg KOH/g) | 43 | 49 | 33 | 34 | 38 |

(B) Herstellung der gegebenenfalls eingesetzten aminofunktionellen Zusatzharze

(B 1) Aminofunktioneller Epoxidharzester

400 Tle eines Bisphenol-A-Epoxidharzes (EEW ca. 900) und 200 Tle eines Bisphenol-A-Epoxidharzes (EEW ca. 475) werden mit 110 Tlen Xylol aufgeschmolzen. Nach Kühlen auf 90° C wird eine Mischung aus 15 Tlen Diethylamin und 25 Tlen Xylol innerhalb von 30 min. zugegeben. Innerhalb weiterer 3 Stunden wird die Temperatur auf 130° C gesteigert und anschließend 250 Tle Tallölfettsäure und 150 Tle iso-Linolsäure zugegeben. Der Ansatz wird dann bei 220° C unter azeotroper Destillation (Xylol) bis zu einer Säurezahl von ca. 4 mg KOH/g verestert. Das Xylol wird unter Vakuum abgezogen.

| Kennwerte: | Säurezahl: | 3,5 mg KOH/g |
|---|---|---|
|  | Grenzviskositätszahl: | 18,7 ml/g |
|  | Aminzahl: | 10,8 mg KOH/g |

(B 2) Aminofunktioneller Epoxidharzester

290 Tle eines Bisphenol-A-Epoxidharzes (EEW ca. 475) werden mit 210 Tlen Tallölfettsäure und 210 Tlen iso-Linolsäure bei 220° C bis zu einer Säurezahl von 2,5 mg KOH/g verestert. 80 Tle dieses Epoxidharzesters werden mit 10 Tlen n-Butoxyethanol auf 135° C erwärmt. Bei dieser Temperatur wird innerhalb von 2 Stunden eine Mischung aus 10 Tlen Methylmethacrylat, 3,5 Tlen Isobutylmethacrylat, 3,5 Tlen N-tert.-Butylaminoethylmethacrylat und 3 Tlen Vinyltoluol, sowie als getrennte Zugabe eine Mischung aus 1 Tl Di-tert.-Butylperoxid und 7,5 Tlen n-Butoxyethanol zugegeben. Anschließend wird die Temperatur bei 135 bis 140°C bis zum vollständigen Umsatz der Monomeren gehalten.

| Kennwerte: | Festkörpergehalt: | 86 % |
|---|---|---|
| | Säurezahl: | 1,5 mg KOH/g |
| | Grenzviskositätszahl: | 11,8 ml/g |
| | Aminzahl: | 10,7 mg KOH/g |

(B 3) Aminofunktionelles Alkydharz

240 Tle Tallölfettsäure, 70 Tle iso-Linolsäure, 115 Tle Pentaerythrit und 100 Tle Isophthalsäure werden bei 230°C unter azeotroper Abtrennung des Reaktionswassers bis zu einer Säurezahl von 2 mg KOH/g und einer Grenzviskositätszahl von 7 ml/g verestert. 84,6 Tle dieses Alkydharzes (Festkörpergehalt 94,6 %) werden mit 15,4 Tlen Xylol, 10 Tlen Isobutylmethacrylat, 6 Tlen N-tert.-Butylaminoethylmethacrylat und 4 Tlen Vinyltoluol auf 90°C erwärmt. Nach Zugabe einer Lösung von 1 Tl Di-tert.-Butylperoxid in 5 Tlen Xylol wird die Temperatur auf 140°C gesteigert und bis zum praktisch vollständigen Umsatz der Monomeren gehalten. Anschließend wird das Xylol unter Vakuum abgezogen.

| Kennwerte: | Festkörpergehalt: | 97,5 % |
|---|---|---|
| | Grenzviskositätszahl: | 13,5 ml/g |
| | Aminzahl: | 17,8 mg KOH/g |

(B 4) Aminofunktionelles Urethanalkydharz

380 Tle Sojafettsäure, 106 Tle Glycerin, 47 Tle Pentaerythrit und 100 Tle Phthalsäureanhydrid werden bei 240°C bis zu einer Säurezahl unter 2 mg KOH/g verestert. 80 Tle dieses Alkydharzes werden mit 60 Tlen Toluol verdünnt und auf 60°C erwärmt. Nach Zugabe von 18 Tlen Toluylendiisocyanat (handelsübliches Isomerengemisch 80/20 2,4- bzw. 2,6 TDI)) wird die Temperatur eine Stunde bei 65°C gehalten. Dann werden 2 Tle Dimethylaminoethanol und 6 Tle Toluol zugesetzt und die Temperatur bei 100°C gehalten, bis eine Grenzviskositätszahl von 10,5 bis 11,5 ml/g (CHCl$_3$/20°C) erreicht ist. Gegebenenfalls kann mit kleinen Zugaben von weiterem Toluylendiisocyanat korrigiert werden.

| Kennwerte: | Festkörpergehalt: | 60,5 % |
|---|---|---|
| | Grenzviskositätszahl: | 10,9 ml/g |
| | Aminzahl: | 12,5 mg KOH/g |

Kombination des Urethanalkydharzes mit dem Epoxidharzester SE 1.

Die Herstellung des Epoxidharzesters SE 1 (s. Tab. 1) wird bei einer Grenzviskositätszahl von ca. 12 ml/g unterbrochen. Nach Zugabe von 30 Tlen (Festharz) der oben hergestellten Lösung des Urethanalkydharzes (B 4) zu 70 Tlen des Esters SE 1 wird das Lösemittel unter Vakuum abgezogen und eine Temperatur von 140 bis 160°C gehalten, bis die Grenzviskositätszahl auf 18 ml/g angestiegen ist. Die weitere Verarbeitung ist im Beispiel 5, Tab. 2 angegeben.

**(B 5) Aminofunktionelles Polymerisatharz**

7

300 Tle Leinöl werden auf 140 °C erhitzt und innerhalb von 8 Stden gleichmäßig mit einer Monomerenmischung aus 310 Tlen Vinyltoluol, 120 Tlen Methylmethacrylat, 100 Tlen Isobutylmethacrylat und 70 Tlen N-tert.-Butylaminoethylmethacrylat, sowie einer getrennten Initiatorlösung aus 30 Tlen Di-tert.-Butylperoxid und 100 Tlen Leinöl versetzt. Die Temperatur wird bis zum praktisch vollständigen Umsatz der Monomeren gehalten.

| Kenndaten: | Festkörpergehalt: | 97 % |
|---|---|---|
| | Grenzviskositätszahl: | 11,2 ml/g |
| | Aminzahl: | 20 mg KOH/g |

### (C) Herstellung der Emulsionen

Zusammensetzung und Prüfdaten der Emulsionen sind in Tab. 2 zusammengefaßt. Alle Mengenangaben für Harze beziehen sich auf Festharz. In der Spalte Lösemittel ist die Gesamtmenge des in der Emulsion enthaltenen n-Butoxyethanols angegeben.

Zur Herstellung der Emulsionen werden die Harze bzw. Harzmischungen zusammen mit dem Lösemittel auf 70 °C erwärmt, die Base/Wasser-Mischung innerhalb von 30 - 60 Minuten unter Rühren zugegeben und weitere 60 Minuten nachgerührt.

Zur Prüfung werden die 40 %igen Emulsionen auf einen pH-Wert von 9,0 ± 0,1 eingestellt. Die Messung der Viskosität erfolgt bei 20 °C mit einem BROOKFIELD Rotationsviskosimeter Type RVF mit Spindel 7 bei 10 Umdrehungen/min. Die Lagerstabilität wird in einem Kurztest bei 80 °C geprüft.

Innerhalb der angegebenen Zeit (Stunden) treten keine sichtbaren Veränderungen (Absetzen, Koagulation) ein. Die Gefrierstabilität wird durch Auftauen einer 24 Stunden bei -25 °C gelagerten Emulsion festgestellt (REG = regeneriert, unverändert).

TABELLE 2

| Zusammensetzung und Prüfwerte der Emulsionen (Alle Mengenangaben für Harzkomponenten beziehen sich auf Festharz) | | | | | | | | | |
|---|---|---|---|---|---|---|---|---|---|
| Beispiel | | 1 | 2 | 3 | 4 | 5 | 6 | 7 | 8 |
| Epoxidharzester | SE 1 | 100 | -- | 80 | -- | 70 | -- | -- | -- |
| | SE 2 | -- | 100 | -- | 90 | -- | -- | -- | -- |
| | SE 3 | -- | -- | -- | -- | -- | 90 | -- | -- |
| | SE 4 | -- | -- | -- | -- | -- | -- | 80 | -- |
| | SE 5 | -- | -- | -- | -- | -- | -- | -- | 80 |
| Aminofunktionelles Zusatzharz | B1 | -- | -- | 20 | -- | -- | -- | -- | -- |
| | B2 | -- | -- | -- | 10 | -- | -- | 20 | -- |
| | B3 | -- | -- | -- | -- | -- | -- | -- | 20 |
| | B4 | -- | -- | -- | -- | 30 | -- | -- | -- |
| | B5 | -- | -- | -- | -- | -- | 10 | -- | -- |
| n-Butoxyethanol | | 15 | 15 | 17,5 | 17,5 | 17,5 | 17,5 | 17,5 | 17,5 |
| Ammoniak, 25%ig | | 25,5 | 25,5 | 20,5 | 23,5 | 18,5 | 17,5 | 16,5 | 18 |
| Wasser - | | 109,5 | 109,5 | 112 | 109 | 114 | 115 | 116 | 114,5 |
| Viskosität (Pa.s) | | 125 | 65 | 9 | 7 | 9 | 12 | 10 | 7 |
| Lagerstabilität, 80°C (Stden) | | 120 | 96 | 168 | 120 | 192 | 108 | 168 | 192 |
| Gefrierstabilität | | alle Proben REG | | | | | | | |

Prüfung der erfindungsgemäß hergestellten Epoxidharzester-Emulsionen

(I) Prüfung in Klarlackformulierung:

Die Emulsionen werden, bezogen auf Festharz, mit 2 % einer handelsüblichen wasserverträglichen Cobalt-Sikkativlösung und 1 % eines handelsüblichen Hautverhinderungsmittels auf Oximbasis versetzt, und falls erforderlich, mit deionisiertem Wasser soweit verdünnt, daß ein fließfähiger Klarlack mit einem Festkörpergehalt von etwa 35 bis 40 % entsteht. Die Lacke werden nach einer Reifezeit von 24 Stunden in einer Schichtstärke, welche einer Trockenfilmstärke von 30 bis 40 μm entspricht, auf Glasstreifen aufgezogen. Der Trocknungsverlauf wird mit einem entsprechenden Gerät (z. B. Drying Recorder) verfolgt.

(II) Prüfung in einer Weißlackformulierung:

Die Emulsionen wurden wie bei (I) beschrieben mit Sikkativ und Hautverhinderungsmittel versetzt und auf einer Perlmühle mit Titandioxid (Rutil-Type) in einem Pigment/Bindemittelverhältnis von 0,8 : 1 vermahlen. Die Prüfung der auf Glasplatten applizierten Lacke erfolgt in einer Trockenfilmstärke von 30 bis 40 μm hinsichtlich Trocknung, Härte, Glanz, Gilbung und Wasserfestigkeit. Die Prüfung der Trocknung erfolgte wie bei (I).

Die Prüfung der Härte erfolgte nach DIN 53 157 (KÖNIG). Die angegebenen Werte sind Sekunden. Die Glanzmessung erfolgte mit einem Reflektometer nach DIN 67 530.

Der Grad der Gilbung wird subjektiv an 1 Woche bei Raumtemperatur und anschließend 24 Stunden bei 80°C gelagerten Anstrichen beurteilt (1 = entsprechend einem als Vergleichsstandard benutzen Sojaalkydharz auf Lösemittelbasis, 63 % Ölgehalt; 5 = entsprechend einem als Vergleichsstandard benutzten langöligen Leinöl-Holzöl-Alkydharz). Die Prüfung der Wasserfestigkeit erfolgt durch 24-stündige Lagerung der 1 Woche bei Raumtemperatur getrockneten Filme in Wasser bei 20°C (E : Film erweicht, regeneriert nach wenigen Stunden).

(III) Prüfung einer roten Einschichtlackformulierung

Ein roter Maschinenlack wird unter Verwendung von SICOMIN-Rot L 3330 S (BASF AG) in einem Pigment-Bindemittelverhältnis von 0,5 : 1 und gemäß den unter (II) gemachten Angaben hergestellt und geprüft.

(IV) Prüfung in einer Korrosionsschutzlackformulierung

Ein Korrosionsschutzlack wird in der oben beschriebenen Weise und nach folgender Rezeptur hergestellt:

| | |
|---|---|
| 250 Tle | Emulsion ca. 40%ig gemäß Beispiel |
| 90 Tle | Eisenoxidrot |
| 30 Tle | Calciumcarbonat |
| 60 Tle | Zinkphosphat |
| 2 Tle | Sikkativgemisch |
| 1 Tl | Hautverhinderungsmittel |
| 1 Tl | Antiabsetzmittel |
| 1 Tl | Entschäumer |

Die Applikation des Lackes erfolgt 24 Stunden nach der Fertigung auf Glasplatten bzw. für den Salzsprühtest (nach ASTM B-117-64) auf entfettetem Stahlblech.

Härte und Salzprühtest werden nach 1 wöchiger Trocknung bei 20°C geprüft (G/3 = geringfügige Unterrostung, Ablösung am Kreuzschnitt max. 3 mm).

Die Prüfergebnisse sind in der Tabelle 3 zusammengefaßt.

TABELLE 3

| Emulsion gemäß Beispiel | 1 | 2 | 3 | 4 | 5 | 6 | 7 | 8 |
|---|---|---|---|---|---|---|---|---|
| Klarlack (Formulierung I) Trocknung | | | | | | | | |
| klebfrei (Stden) | 1,5 | 2 | 1,5 | 2 | 1 | 1,25 | 1,25 | 1,5 |
| griffest (Stden) | 3 | 5 | 3,5 | 6 | 2,5 | 2,5 | 3 | 3 |
| Pigmentierte Lacke Formulierung Trocknung | (II) | (IV) | (II) | (IV) | (IV) | (III) | (III) | (II) |
| klebfrei (Stden) | 1,25 | 1,5 | 1,5 | 1,25 | 0,75 | 1,5 | 1,25 | 1,5 |
| griffest (Stden) | 3 | 3 | 3 | 3,5 | 2,5 | 4 | 3,5 | 4 |
| Härte nach 1 Woche (Sek) | 51 | 43 | 48 | 50 | 57 | 55 | 59 | 47 |
| Glanz (%) | 78 | -- | 75 | -- | -- | 69 | 73 | 82 |
| Gilbung | 1-2 | -- | 2 | -- | -- | -- | -- | 2 |
| Wasserfestigkeit | E | E | E | E | E | E | E | E |
| Salzsprühtest | - | G/3 | -- | G/3 | G/3 | -- | -- | -- |

## Ansprüche

1. Verfahren zur Herstellung von wäßrigen, oxidativ trocknenden Epoxidharzesteremulsionen, dadurch gekennzeichnet, daß man

(A) 25 bis 45 Gew.-% eines oder mehrerer Epoxidharze mit einem mittleren Epoxidäquivalentgewicht zwischen 200 und 1000, vorzugsweise solchen auf Basis des Bisphenol A, mit

(B) 20 bis 40 Gew.-% von ungesättigten Fettsäuren, vorzugsweise von Gemischen isoliert ungesättigter Fettsäuren mit konjugiert ungesättigten Fettsäuren, bis zu einer Säurezahl von 5 bis 15 mg KOH/g verestert, anschließend den Partialester mit

(C) 20 bis 50 Gew.-% eines Fettsäurecopolymerisates aus 30 bis 50 Gew.-% von ungesättigten Fettsäuren mit einer Jodzahl von über 135, vorzugsweise von 160 - 200, und überwiegend isolierten Doppelbindungen, 10 bis 25 Gew.-% Methacrylsäure und 30 bis 55 Gew.-% anderen copolymerisierbaren Monomeren, welche neben der C-C-Doppelbindung keine weiteren funktionellen Gruppen tragen, bis zu einer Säurezahl, welche etwa 90 % der von der Methacrylsäure stammenden Carboxylgruppen entspricht, und einer Grenzviskositätszahl, gemessen in Chloroform bei 20°C, zwischen 14 und 24 ml/g, reagiert, mit der Maßgabe, daß die Menge der Komponenten so gewählt wird, daß die Säurezahl des Reaktionsproduktes zwischen 30 und 60, vorzugsweise zwischen 35 und 55 mg KOH/g liegt, und gegebenenfalls nach Zumischung von oder partieller Reaktion mit bis zu 45 Gew.-%, bezogen auf die Menge des sauren Epoxidharzesters, eines Aminogruppen entsprechend einer Aminzahl von 5 bis 40 mg KOH/g aufweisenden Polykondensations-, Polyadditions- und/oder Polymerisationsprodukts, wobei die Aminzahl des Endproduktes maximal 5 mg KOH/g betragen soll, und nach Zugabe von maximal 20 Gew.-% eines organischen, wasserverträglichen Lösemittels, und nach teilweiser oder vollständiger Neutralisation der freien Carboxylgruppen, das Endprodukt in Wasser emulgiert.

2. Verfahren nach Anspruch 1, dadurch gekennzeichnet, daß man für das Fettsäure-Copolymerisat (C) ein Fettsäuregemisch einsetzt, welches neben den Fettsäuren mit überwiegend isolierten Doppelbindungen bis zu 25 Gew.-% Conjuen-Fettsäuren enthält.

3. Verfahren nach den Ansprüchen 1 und 2, dadurch gekennzeichnet, daß man für das Fettsäure-Copolymerisat (C), neben der Methacrylsäure, als Comonomere zumindestens 80 % solche (Meth)-acrylverbindungen und/oder aliphatische und/oder aromatische Vinylverbindungen einsetzt, die benzinlösliche Homopolymerisate bilden.

4. Verfahren nach den Ansprüchen 1 bis 3, dadurch gekennzeichnet, daß man als basisches Zusatzharz, allein oder in Mischung, aminofunktionelle Epoxidharzester, aminofunktionelle Alkyd-, Urethan-, Urethanalkyd oder Polyamidharze oder aminofunktionelle Copolymerisate einsetzt, die mit dem sauren Epoxidharzester aus A, B und C zumindest weitgehend verträglich sind.

5. Verfahren nach den Ansprüchen 1 bis 4, dadurch gekennzeichnet, daß man den sauren Epoxidharzester mit dem basischen Zusatzharz durch Co-Kondensation bei der Esterherstellung oder durch Verknüpfung der Komponenten mittel Diisocyanaten partiell bis zum Erhalt einer gelfreien, einwandfrei emulgierbaren und verträglichen Harzkombination reagiert.

6. Verwendung der nach den Ansprüchen 1 bis 5 hergestellten wäßrigen Epoxidharzesteremulsionen als Bindemittel zur Formulierung von lufttrocknenden oder forciert trocknenden Lacken.